# EUROPEAN PATENT APPLICATION

(11) **EP 3 561 473 A1**
(43) Date of publication of application: **30.10.2019**
(21) Application number: 18382280.8
(22) Date of filing: 25.04.2018
(51) Int. Cl.: G01M 5/00, G01M 11/08

(54) **A COMPOSITE STRUCTURE WITH DAMAGE LOCATION CAPABILITY AND METHOD FOR MANUFACTURING A COMPOSITE STRUCTURE WITH DAMAGE LOCATION CAPABILITY**

(71) Applicant: Airbus Operations, S.L., 28906 Getafe (ES)
(72) Inventor: DE MIGUEL GIRALDO, Carlos, 28905 Madrid (ES); GARCIA VAZQUEZ, Luis, 28906 MADRID (ES); ORCHA VILLACORTA, Julio, 28906 MADRID (ES); ZUÑIGA SAGREDO, Juan, 28906 MADRID (ES)

(57) **Abstract**

The invention refers to a composite structure (1) with damage location capability that comprises a composite part (2) having an area to be monitored, an optical fiber sensor (3), and a processing data unit (4) adapted to: obtain optical parameters, convert these optical parameters into axial strain parameters, form a strain signal, identify a target area (5) in the composite part from each peak of the strain signal that surpasses a first value with respect to a reference signal associated to an undamaged composite part, identify a damage in the target area (5) from each displacement of each peak of the strain signal that surpasses a second value with respect to a reference signal associated to an undamaged composite part, and obtain the location of the damage from the location of the displaced peak. The invention further refers to a method for manufacturing a composite structure with damage location capability.

## Description

### Object of the invention

The present invention refers to a composite structure adapted to identify and localize a damage, such as a disbond or delamination occurred in a composite part.

One object of the present invention is to provide a composite structure capable of performing an immediate detection and an accurate location of a damage present in a composite part. It is also an object of the invention to characterize the detected damage in order to be able of performing a diagnostic of the damage.

Another object of the invention is to provide a composite structure capable of lowering the downtime caused by the current inspection of composite parts, and minimizing the need of such inspections, which usually involve unwanted costs and workload.

The invention also refers to a method for manufacturing a composite structure with damage location capability.

Another object of the invention is to provide a composite structure that is compatible with the manufacturing conditions of composite parts to easy the adaptations required in these composite parts.

### Background of the invention

Nowadays, in-service inspections of composite parts are principally carried out by classical Non Destructive Inspections (NDI), and typically, by manual ultrasound pulse echo.

Conventional inspections take place according to scheduled and/or unscheduled inspection programs. These inspections require access to the inspection area, availability of inspection systems, qualified inspectors, working time for the inspection, reporting and assessment of the results, and downtime of the equipment in which the composite part is integrated. All of these requirements involve substantial costs, and also an unpredictable availability of resources.

Within the field of structural health monitoring of composite structures, optical fiber sensors are increasingly advancing with regard to other conventional instruments, becoming one of the best solution for some applications.

Within the family of optical fiber sensors, discrete fiber Bragg grating sensors and distributed sensing fiber consisting of conventional optical fiber with backscattering reflection can be highly used due to their great potential.

These technologies are being developed for measuring and monitoring structural deformations in different types of structures, such as composites used in the aeronautical industry.

In aeronautical structures, traditional manufacturing processes for composites enable incorporating optical fibers within the material such that, after the polymerization of the composite, a unique material-sensor system is formed. This system constitutes a smart material with detecting capabilities potentially triggered by external excitations.

Seeing this compatibility, it would therefore be desirable to provide technical means that based on optical fiber sensors leads to reduce the costs and disturbances derived by damaged composite structures.

### Summary of the invention

The present invention overcomes the above mentioned drawbacks by providing a composite structure with damage location capability, and a method for manufacturing a composite structure with damage location capability, which reduces the costs and disturbances derived by damaged structures.

One aspect of the present invention refers to a composite structure with damage location capability that comprises at least one composite part having an area to be monitored, at least one optical fiber sensor in contact with at least the area to be monitored and deployed following a direction, and a processing data unit in communication with the at least one optical fiber sensor. The processing data unit is adapted to:
- obtain optical parameters associated to the area to be monitored from the optical fiber sensor,
- convert these optical parameters into axial strain parameters, said axial strain parameters representing the mechanical strain magnitude experienced by the composite part along an axial direction to the direction followed by the optical fiber sensor when a force transverse to the direction followed by the optical fiber sensor is applied,
- form a strain signal from the axial strain parameters,
- identify one target area in the composite part from each peak of the strain signal that surpasses a first established value with respect to a reference signal associated to an undamaged composite part,
- identify a damage in the target area from each displacement of each peak of the strain signal that surpasses a second established value with respect to the reference signal associated to the undamaged composite part,
- and obtain the location of the damage from the location of the displaced peak.

Equipping a composite part with an optical fiber sensor and a processing data unit configured as mentioned above, provides a permanent damage inspection in said composite part. This on-board inspection allows an immediate detection of damage, avoiding the appearance of unexpected damages, and thus the downtime, workload and costs caused by the scheduled and unscheduled inspection of composite parts.

In addition to identify damages, the invention provides precise location of the detected damages. This way, the invention offers valuable information for the diagnostic of the damage and for the repairing tasks.

According to the invention, the processing data unit may be further adapted to obtain the size of the identified damage from the value of the distance that each peak of the strain signal has been displaced with respect to the location of said peak in a reference signal associated to the target area in an undamaged composite part.

In addition, the processing data unit may be further adapted to obtain the residual strength of the composite part from the size of the identified damage.

This way, the composite structure is adapted to shape or characterize the detected damage. Thus, the invention offers valuable information to make a diagnostic of the damage to know how severe is, and if so, if an immediate action to restore load capacity is required.

The target area may comprise a transition area in the at least one composite part. Transition areas have different thickness and/or stiffness properties with respect to their adjacent areas. Usually, these different properties are caused by structural discontinuities in the composite part. Other target areas may include glued joints and/or structural damages (possibly caused by impacts received during the service of an aircraft).

According to another preferred embodiment, the optical fiber sensor consists of multiplexed Bragg gratings or distributed sensing fiber based on the monitoring of the backscattering reflection.

According to another preferred embodiment, the invention contemplates an aircraft that comprises a composite structure with damage location capability as describe above. The damage detection can be performed off-line, when the aircraft is on ground, and on-line, in a continuous process during flight operation, in function of the configuration of the used processing data unit.

Another aspect of the invention refers to a method for manufacturing a composite structure with damage location capability comprising the steps of providing at least one composite part having an area to be monitored, providing at least one optical fiber sensor and deploying it following a direction to be in contact with at least the area to be monitored, and providing a processing data unit, in communication with the at least one optical fiber sensor, and configuring the processing data unit to:
- obtain optical parameters associated to the monitored area from the optical fiber sensor,
- convert these optical parameters into axial strain parameters, said axial strain parameters representing the mechanical strain magnitude experienced by the composite part along an axial direction to the direction followed by the optical fiber sensor when a force transverse to the direction followed by the optical fiber sensor is applied,
- form a strain signal from axial strain parameters,
- identify one target area in the composite part from each peak (Pi) of the strain signal that surpasses a first established value with respect to a reference signal associated to an undamaged composite part,
- identify a damage in the target area from each displacement of each peak (Pi) of the strain signal that surpasses a second established value with respect to the reference signal associated to the undamaged composite part,
- obtain the location of the damage from the location of the displaced peak.

The method of the invention provides a composite structure equipped with a processing data unit and at least one optical fiber sensor in contact with a composite part to provide information (optical information) from which a strain profile can be obtained. The method can be applied and used with independence of the curing composite process: co-cured, co-bonded or secondary bonded.

The method of the invention is compatible with the conventional manufacture of composites, sharing manufacturing conditions, trimming process and final assembly line. Thus, the method of the invention provides a simple and cost-effective way of producing composite structures with damage location.

### Brief description of the drawings

For a better comprehension of the invention, the following drawings are provided for illustrative and non-limiting purposes, wherein:

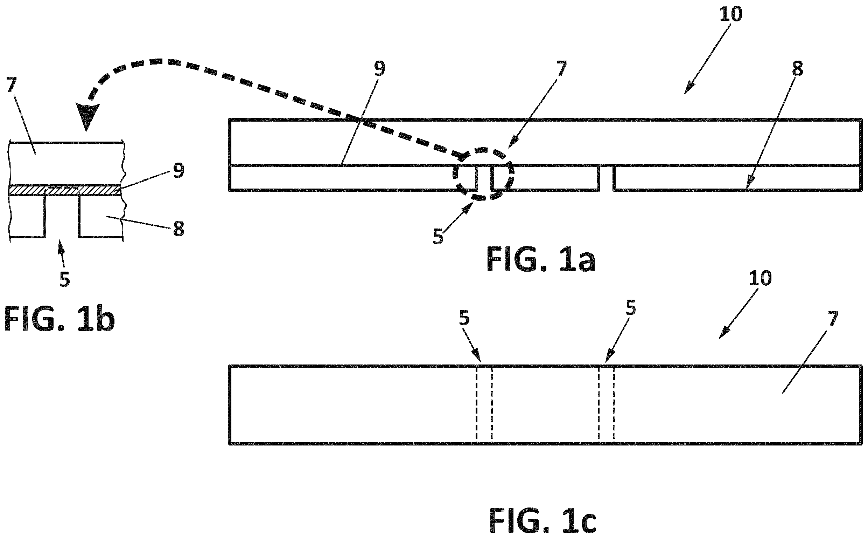

Figure 1a-1c show different views of an undamaged composite part that includes two transition areas. Drawing A shows a cross-sectional view, drawing B a detailed view of one transition area, and drawing C a top view of the composite part.

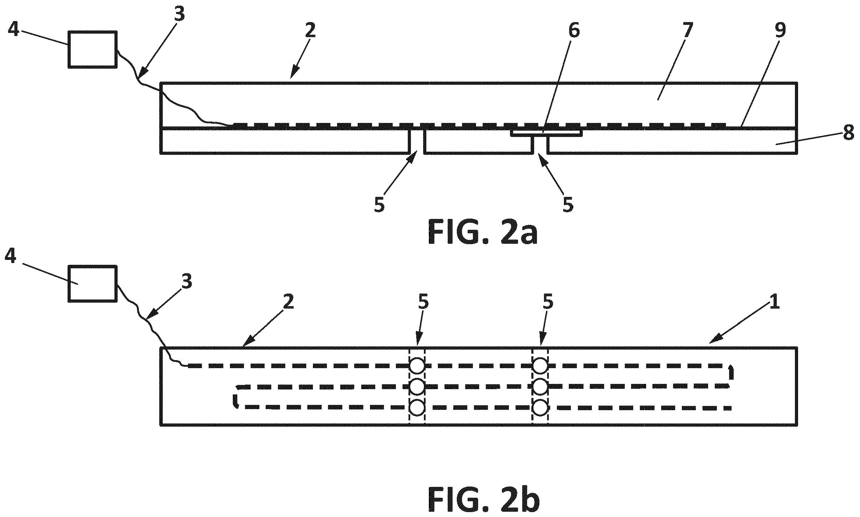

Figure 2a-2b show different views of a composite structure according to an embodiment of the invention in which the composite part includes the two transition areas shown in Figure 1 and one artificial damage. Drawing A shows a cross-sectional view, and drawing B a top view of the composite structure where the location of the transitions have been highlighted.

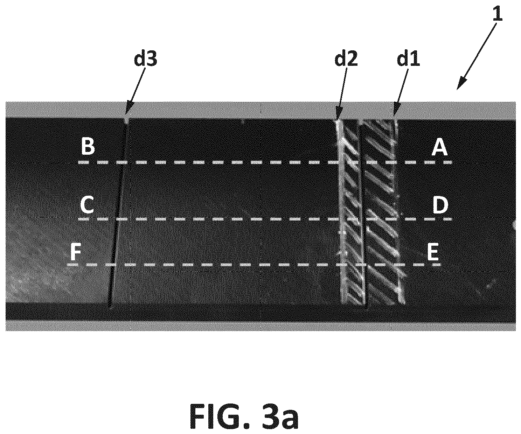

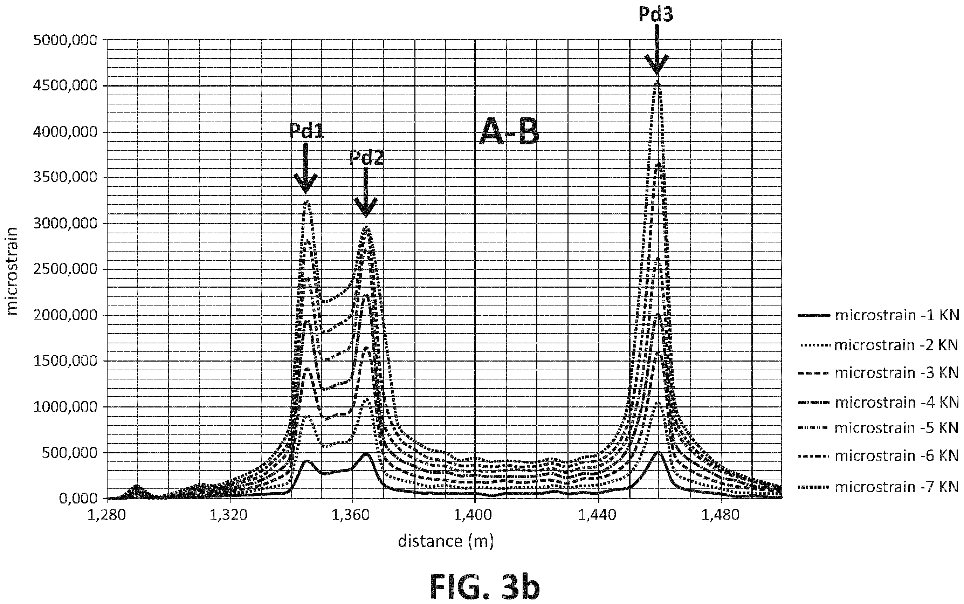

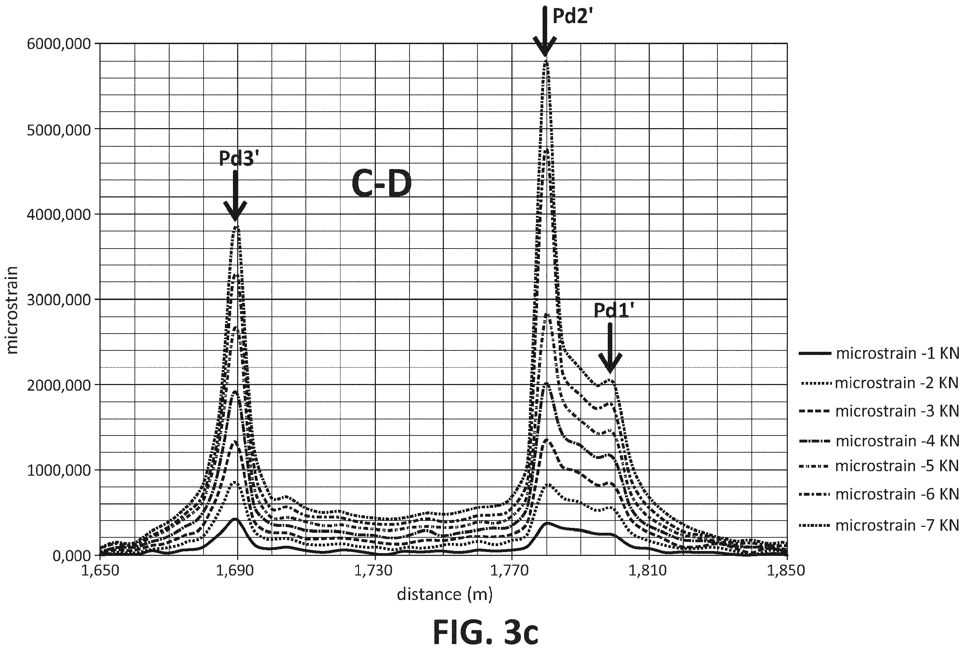

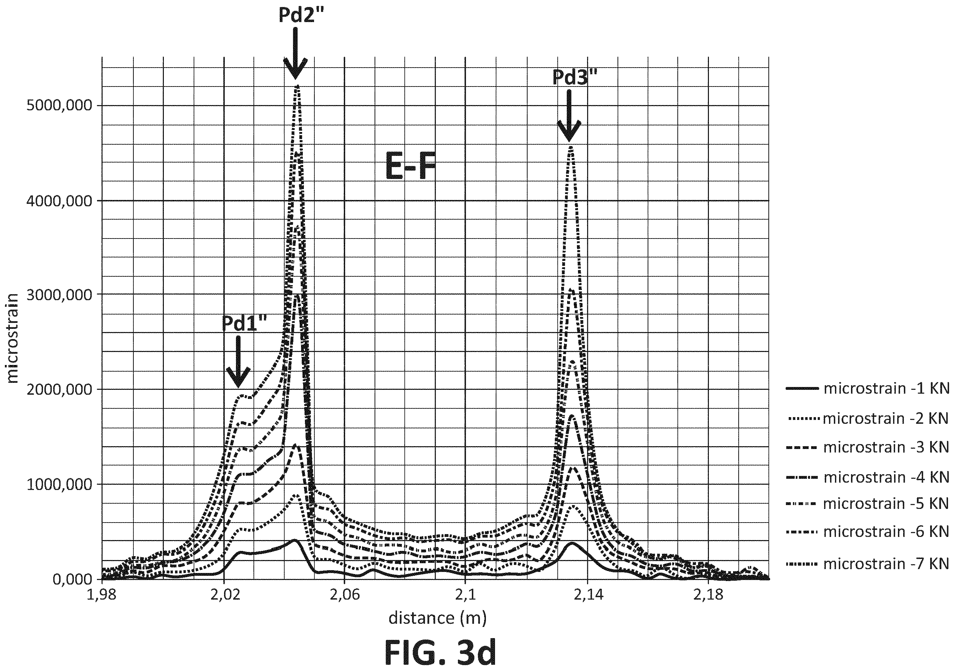

Figure 3a shows a top view of the composite structure shown in Figure 2, where the artificial defect has been marked. Figure 3b shows the strain signals profile obtained from a first section of the optical fiber sensor (section A-B) when different levels of loads (1KN to 7 KN) are transversely applied to the direction followed by the optical fiber sensor. Figure 3c shows the strain signals profile obtained from a second section of the optical fiber sensor (section C-D) when different levels of loads (1KN to 7 KN) are transversely applied to the direction followed by the optical fiber sensor. Figure 3d shows the strain signals profile obtained from a third section of the optical fiber sensor (section E-F) when different levels of loads (1KN to 7 KN) are transversely applied to the direction followed by the optical fiber sensor.

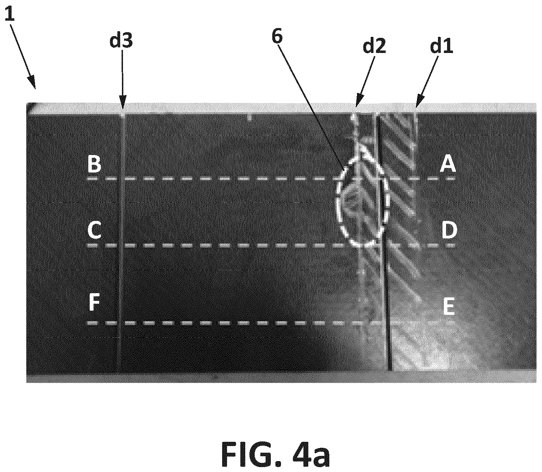

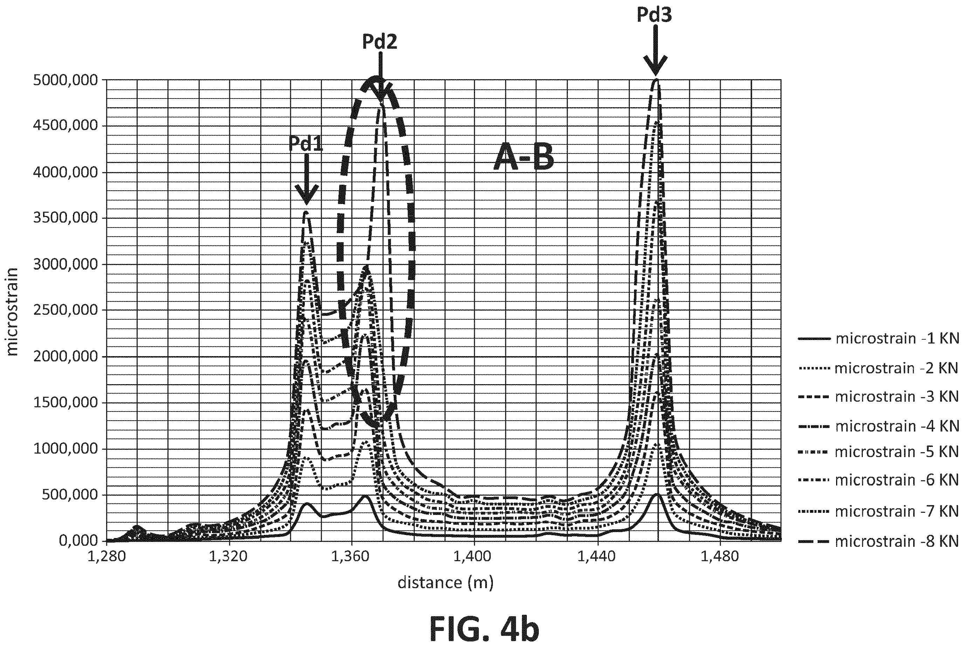

Figure 4a shows a top view of the composite structure shown in Figure 2, where the artificial defect and the detected damage have been marked. Figures 4b -4d show the strain signals profile obtained from each one of the sections of the optical fiber sensor when different levels of loads (1KN to 8 KN) are transversely applied to the direction followed by the optical fiber sensor.

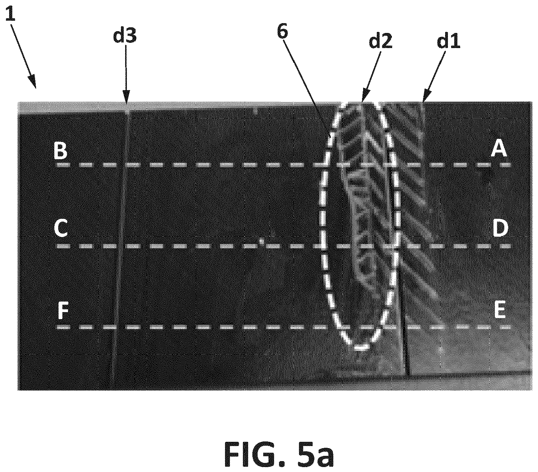

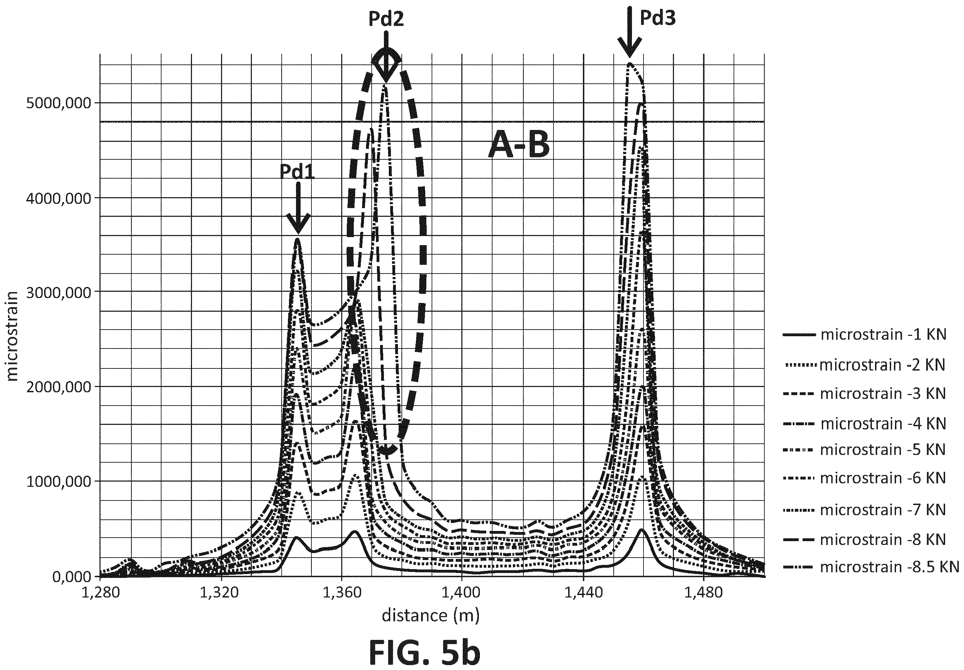

Figure 5a shows a top view of the composite structure shown in Figure 2, where the artificial defect and the detected damages have been marked. Figures 5b - 5d show the strain signals profile obtained from each one of the sections of the optical fiber sensor when different levels of loads (1KN to 8,5 KN) are transversely applied to the direction followed by the optical fiber sensor.

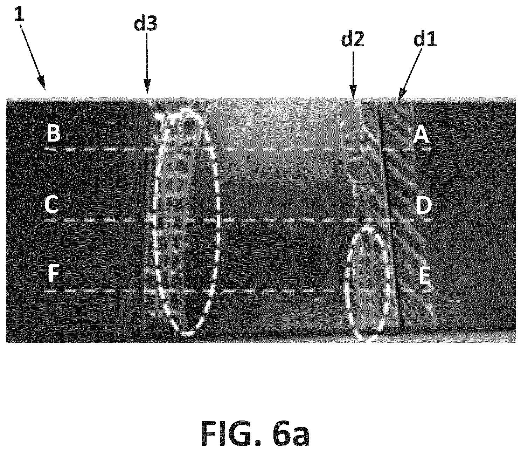

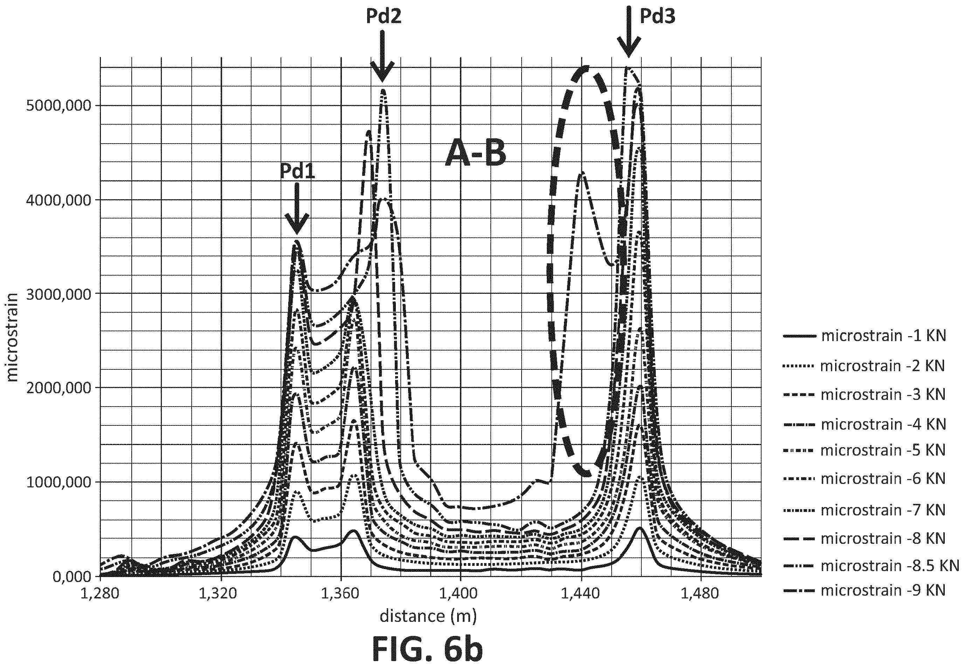

Figure 6a shows a top view of the composite structure shown in Figure 2, where the artificial defect and the detected damages have been marked. Figures 6b - 6d show the strain signals profile obtained from each one of the sections of the optical fiber sensor when different levels of loads (1KN to 9 KN) are transversely applied to the direction followed by the optical fiber sensor.

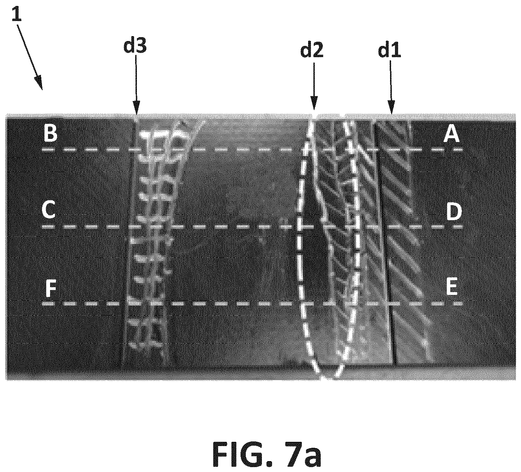

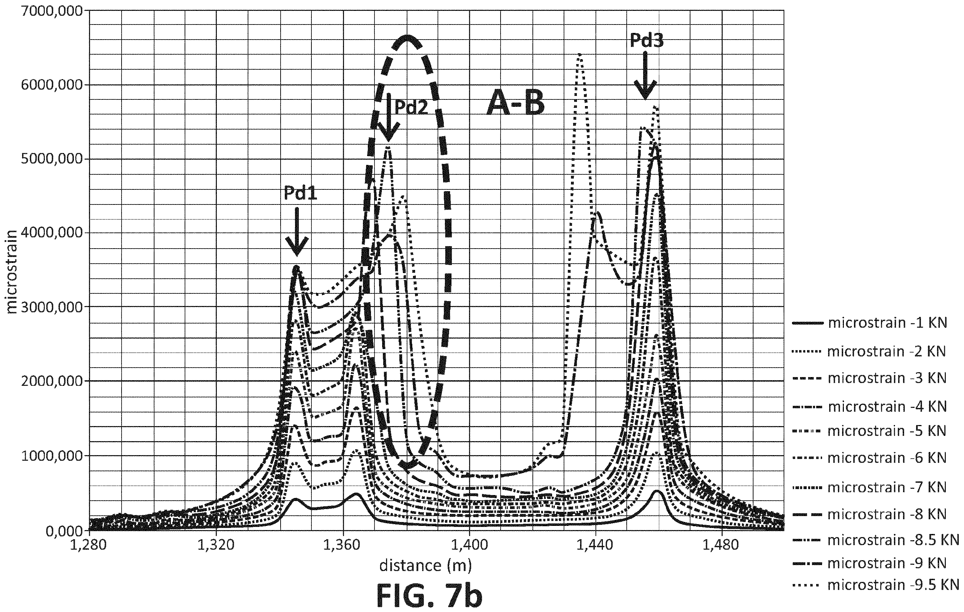

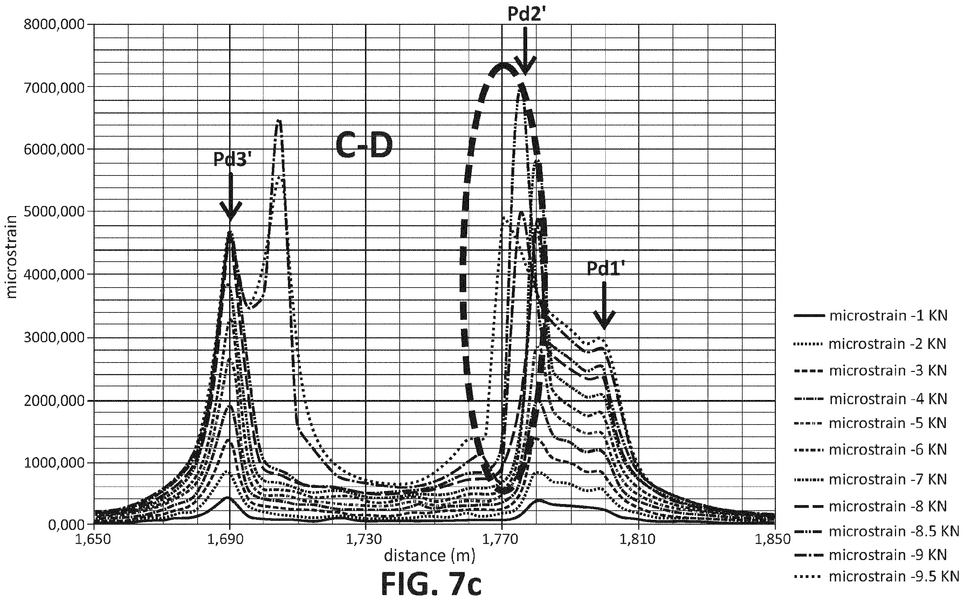

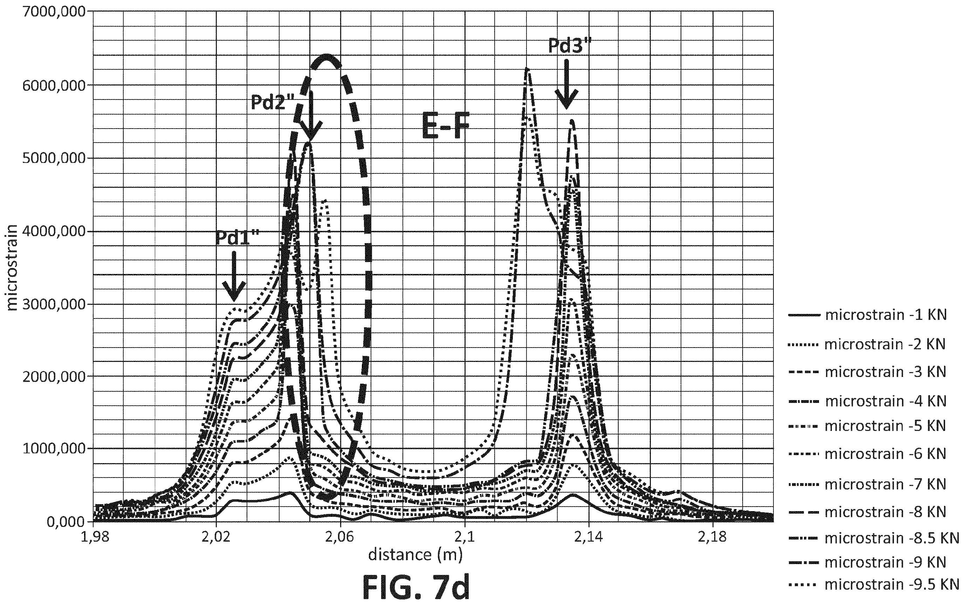

Figure 7a shows a top view of the composite structure shown in Figure 2, where the artificial defect and the detected damages have been marked. Figures 7b - 7d show the strain signals profile obtained from each one of the sections of the optical fiber sensor when different levels of loads (1KN to 9,5 KN) are transversely applied to the direction followed by the optical fiber sensor.

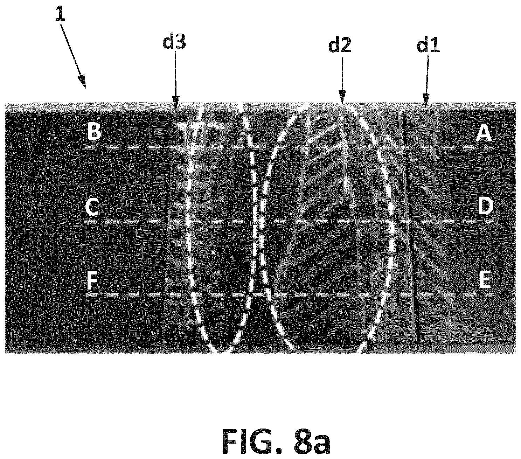

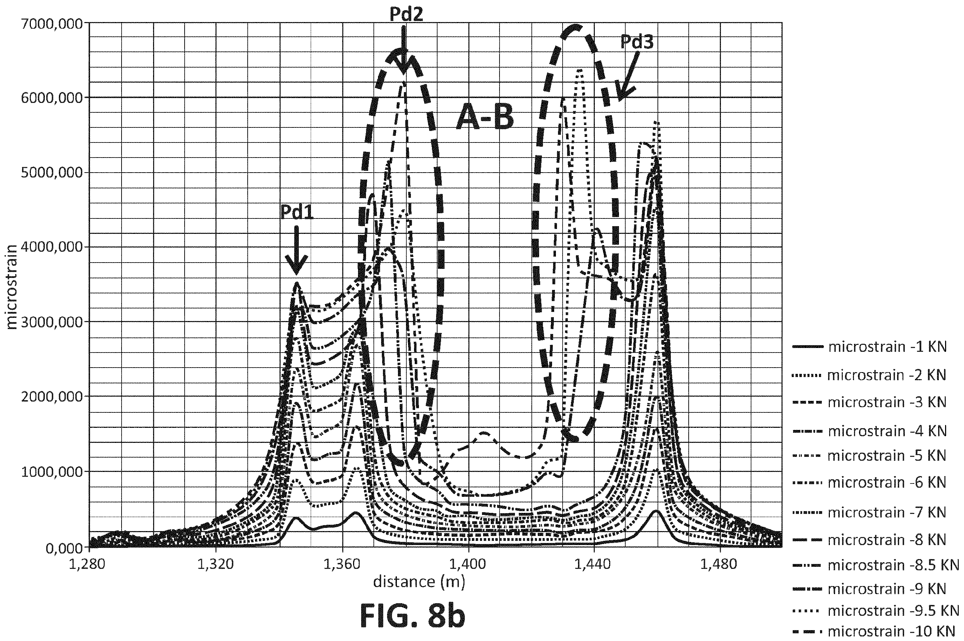

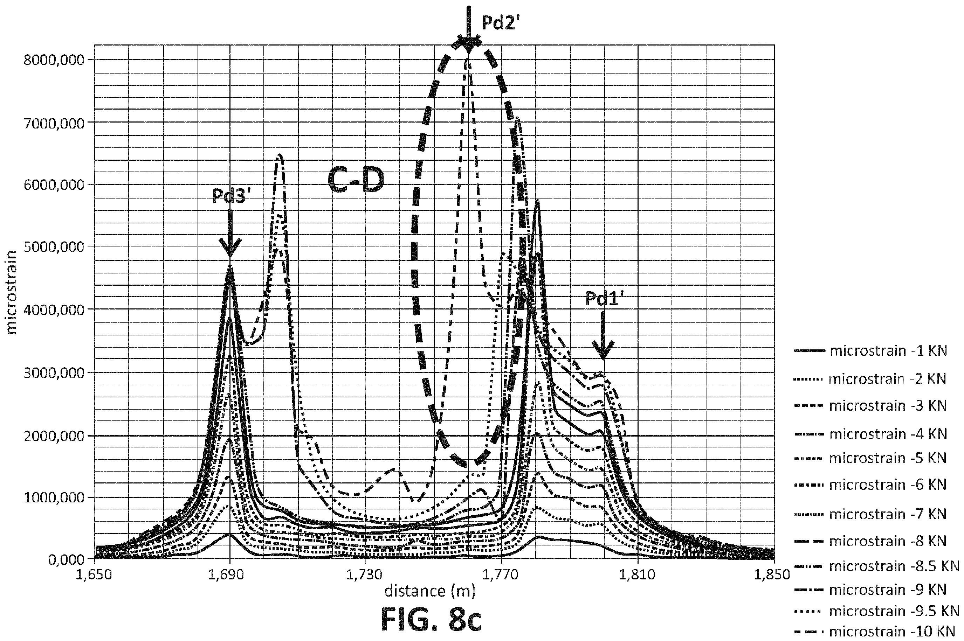

Figure 8a shows a top view of the composite structure shown in Figure 2, where the artificial defect and the detected damages have been marked. Figures 8b - 8d show the strain signals profile obtained from each one of the sections of the optical fiber sensor when different levels of loads (1KN to 10 KN) are transversely applied to the direction followed by the optical fiber sensor.

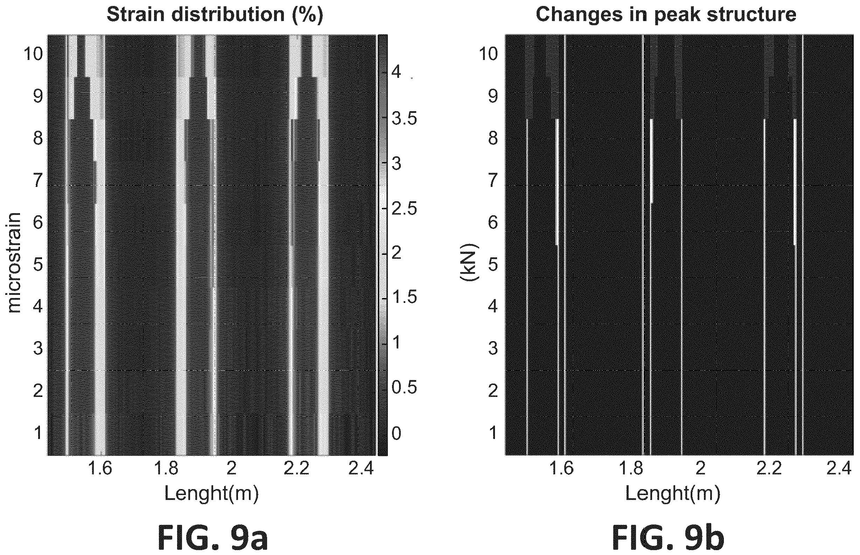

Figure 9a shows, in a color-based graph, the deviation percentage of each peak of each one of the strain signals obtained from different levels of transversely applied loads (1KN to 10 KN). Figure 9b shows, in a color-based graph, the peak deviation values (in mm) of each one of the strain signals obtained from different levels of transversely applied loads (1KN to 10 KN).

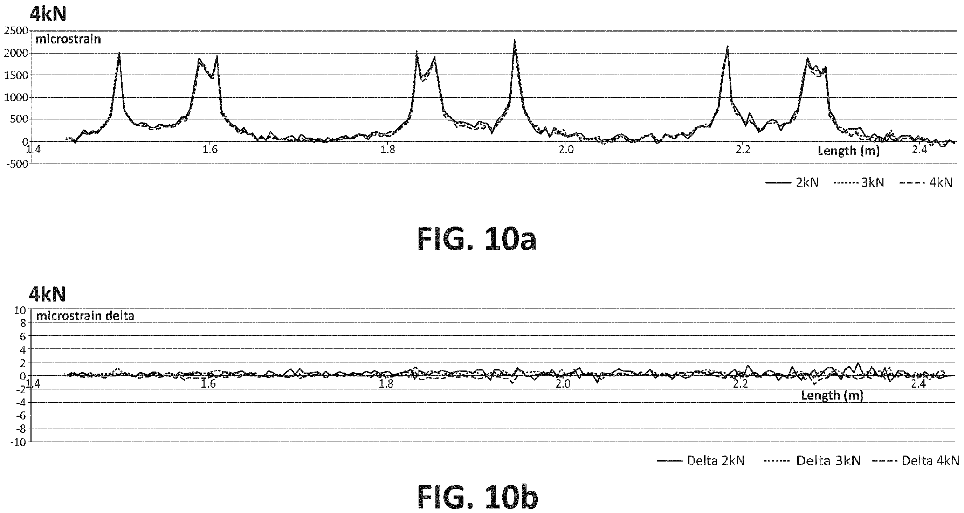

Figure 10a shows both the strain signal of a damaged composite part and the reference signal corresponding to the undamaged part when a force of 4 KN is transversely applied to said part. Figure 10b shows the difference between both the strain signal and the reference signal.

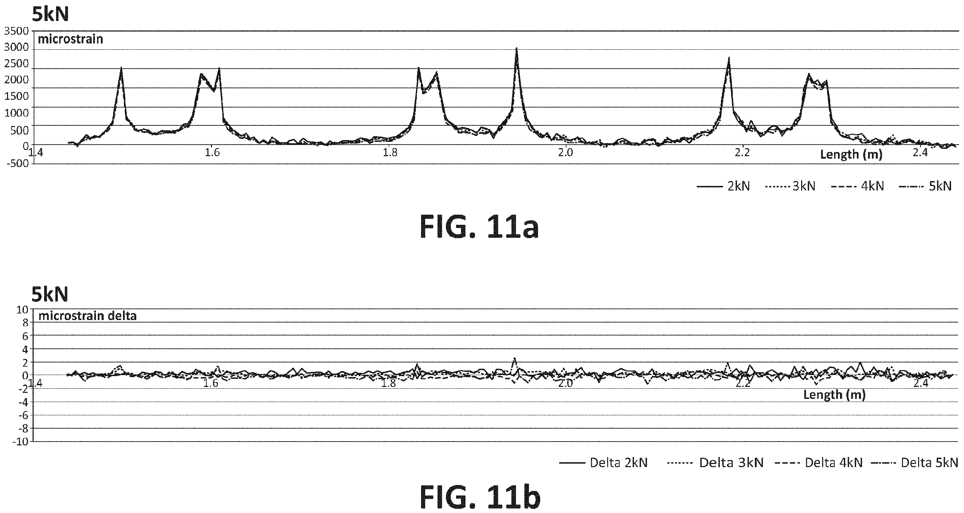

Figure 11a shows both the strain signal of a damaged composite part and the reference signal corresponding to the undamaged part when a force of 5 KN is transversely applied to said part. Figure 11b shows the difference between both the strain signal and the reference signal.

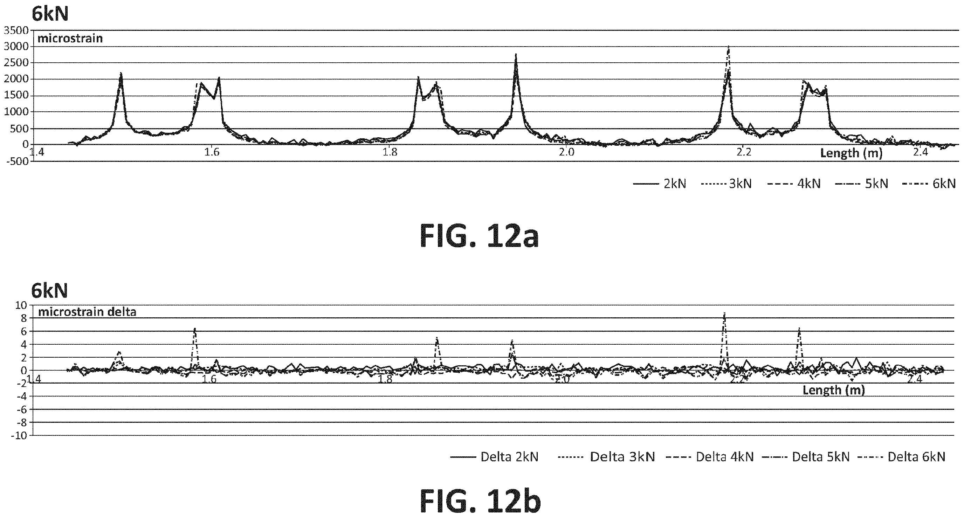

Figure 12a shows both the strain signal of a damaged composite part and the reference signal corresponding to the undamaged part when a force of 6 KN is transversely applied to said part. Figure 12b shows the difference between both the strain signal and the reference signal.

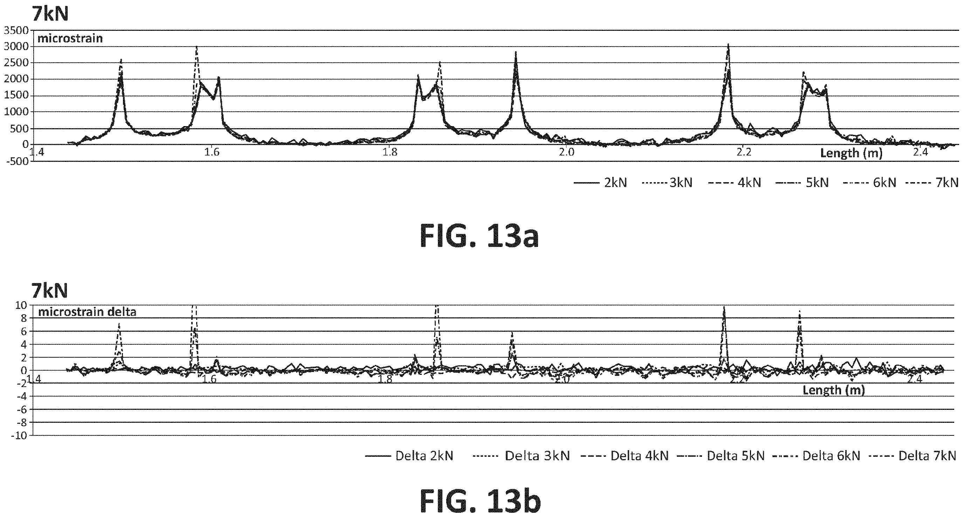

Figure 13a shows both the strain signal of a damaged composite part and the reference signal corresponding to the undamaged part when a force of 7 KN is transversely applied to said part. Figure 13b shows the difference between both the strain signal and the reference signal.

### Preferred embodiments of the invention

Figures 1a-c shows different views of an undamaged composite part (10) that includes an upper layout (7), a lower layout (8), and an adhesive line (9) in between bonding the two layers (7, 8) together. As shown, the undamaged composite part (10) further includes two target areas (5) comprising transition areas. Transition areas have different thickness and/or stiffness properties caused by the inclusion of structural discontinuities with respect to their adjacent areas. Examples of transition areas are areas containing stringer run-outs. In the showed case, the transition areas correspond to a pair of grooves performed in the lower layout (8).

Figures 2a-b shows a composite structure (1) according to an embodiment of the invention. The structure (1) comprises a composite part (2), an optical fiber sensor (3) to obtain measurements, and a processing data unit (4) connected to the optical fiber sensor (3) for processing said measurements. As shown in the cross-sectional view of Figure 2a, the part (2) has the same configuration and transitions as the part shown in Figure 1, besides to one (artificial) damage (6) to be detected.

As further shown in Figure 2a, the optical fiber sensor (3) is embedded into the adhesive line (9) disposed between the layers (7, 8), and deployed along the longitudinal direction of the part (2). Further, as shown in Figure 2b, the optical fiber sensor (3) covers its width to provide more measurements in the transition areas.

The optical fiber sensor (3) is connected to the processing data unit (4), which, according to the invention, is adapted to obtain optical parameters; convert these optical parameters into strain parameters in an axial (parallel) direction to the direction followed by the optical fiber sensor (3) (major direction of the part (2)), wherein said axial strain parameters represents the mechanical strain magnitude experienced by the composite part (2) along an axial direction to the direction followed by the optical fiber sensor (3) when a force transverse to the direction followed by the optical fiber sensor (3) is applied; form a strain signal (S) from the axial strain parameters; identify one target area (5) (transition area) in the composite part (2) from each peak (Pi) of the strain signal (S) that surpasses a first established value with respect to a reference signal associated to an undamaged composite part, identify a damage (6) in the target area (5) (transition area) from each displacement of each peak (Pi) of the strain signal (S) that surpasses a second established value with respect to a reference signal associated to the undamaged composite part (10), and obtain the location of the damage from the location of the displaced peak.

Figure 3a shows a top view of the composite structure (1) shown in Figure 2, where different sections (A-B, C-D, E-F) of the optical fiber sensor (3) and the location of the transitions (both extremes of the artificial defect (d1, d2), and groove (d3)) have been marked.

Figure 3b, 3c, and 3d shows the strain signals obtained from each section (A-B, C-D, E-F) of the optical fiber sensor (3) when different levels of loads (1KN to 7 KN) are transversely applied to the direction followed by the optical fiber sensor (3). As shown in Figures 3b, 3c, 3d, each section (A-B, C-D, E-F) of the optical fiber sensor (3) detects one transition (Pd1, Pd2; Pd1', Pd2'; Pd1", Pd2") in each one of the both extremes of the artificial defect (6), and a third transition (Pd3; Pd3'; Pd3") corresponding to the second groove.

As shown in Figures 3b, 3c, 3d, although increasing levels of loads are applied to the composite part (2), from 1KN to 7 KN, no damage is detected since no peak (Pd1, Pd2, Pd3; Pd1', Pd2', Pd3'; Pd1", Pd2", Pd3") of the strain signals is displaced with respect to a reference signal associated to the transition area in an undamaged composite part (10). Said reference signal consists of the strain signal obtained when no load or a low load (for instance, a load of 1 KN) is transversely applied to the composite part (2).

Figure 4a shows a top view of the composite structure (1) similar to the view shown in Figure 3a in which the detected damage (6) has also been marked. In this case, one damage, specifically a disbond, is detected when a load of 8KN is transversely applied to the composite part (2).

Figure 4b shows the strain signals obtained from the section A-B of the optical fiber sensor (3) when different levels of loads (1KN to 8 KN) are transversely applied to the direction followed by the optical fiber sensor (3). As shown, the peak (Pd2) is shifted from the reference signal (consisting of the strain signal obtained when no load or a low load is transversely applied to the composite part (2)), which indicates that a damage (6) has been identified close to d2.

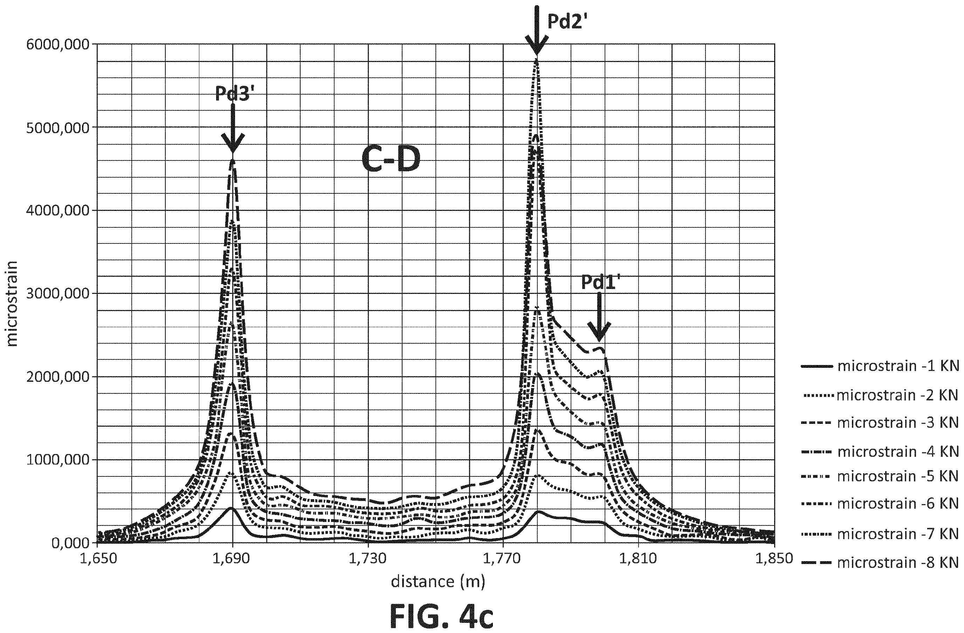

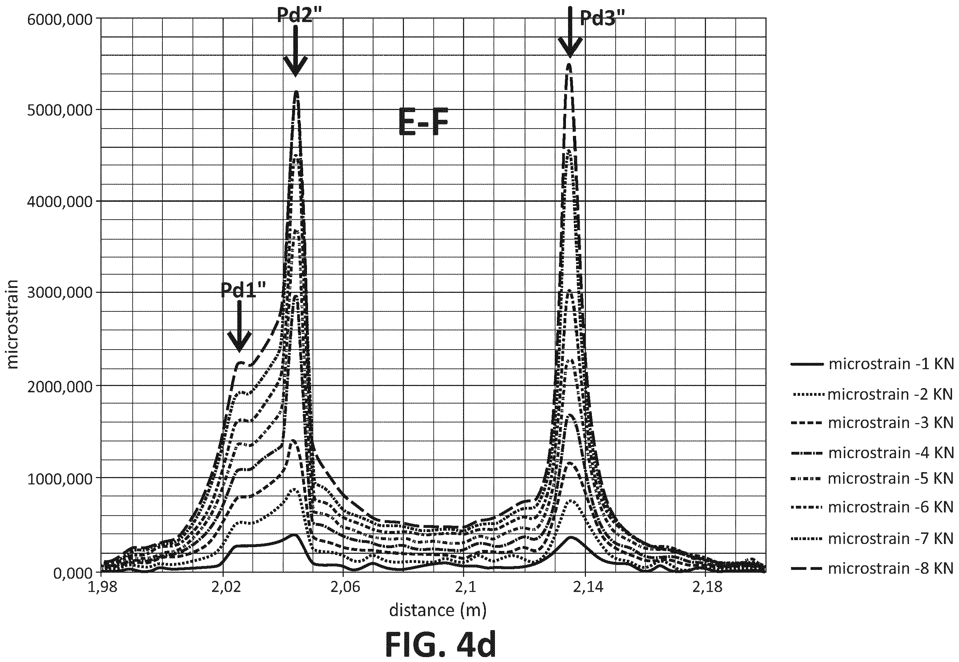

However, Figures 4c and 4d, show that although increasing levels of loads are applied to the composite part (2), no damage is detected, since no peak (Pd1', Pd2', Pd3'; Pd1", Pd2", Pd3") of the strain signals is displaced with respect to their reference signals.

Since the peaks Pd2' and Pd2" are no displaced, it can be said that the damage (6) is located close to d2 and close to the first section of the fiber A-B (not extending to the second C-D, neither to the third section E-F).

Figure 5a shows a top view of the composite structure (1) similar to the view shown in Figure 4a in which the detected damage (6) has grown when a load of 8,5KN has been transversely applied to the composite part (2).

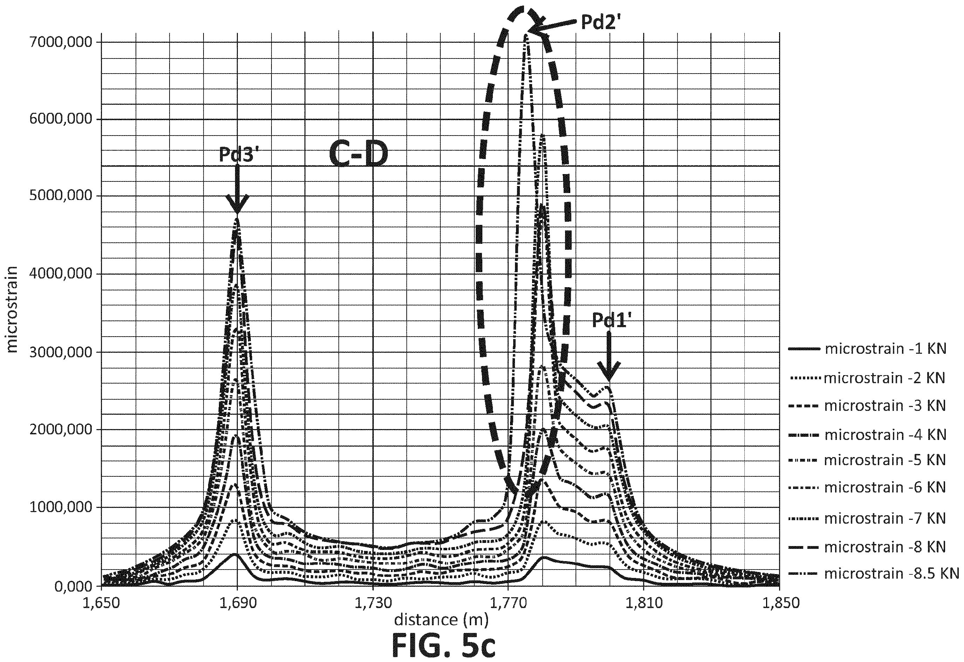

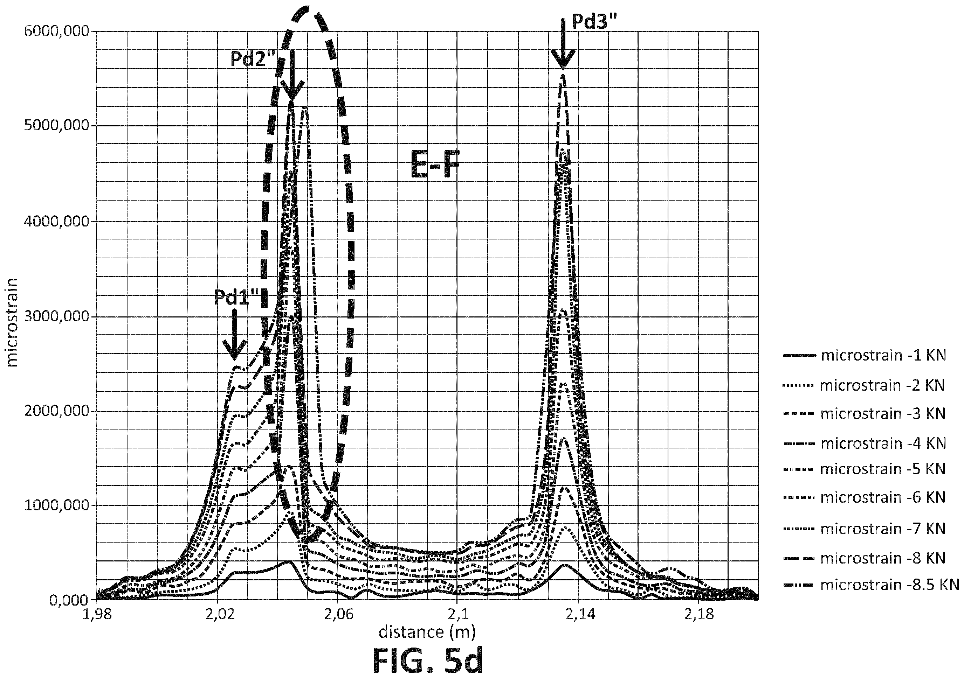

Figure 5b, 5c and 5d show the strain signals obtained from each of the sections A-B, C-D, E-F of the optical fiber sensor (3) when different levels of loads (1KN to 8,5 KN) are transversely applied to the direction followed by the optical fiber sensor (3). As shown, the peaks Pd2, Pd2' and Pd2" are shifted from their respective reference signals. This indicates that a damage (6) has been identified close to d2 and in the three sections, i.e. extending along the width of the part (2) as marked in Figure 5a.

Figure 6a shows a top view of the composite structure (1) similar to the view shown in Figure 5a in which the first detected damage (6) has grown close to the section E-F and a new second damage (6) has appeared when a load of 9KN has been transversely applied to the composite part (2).

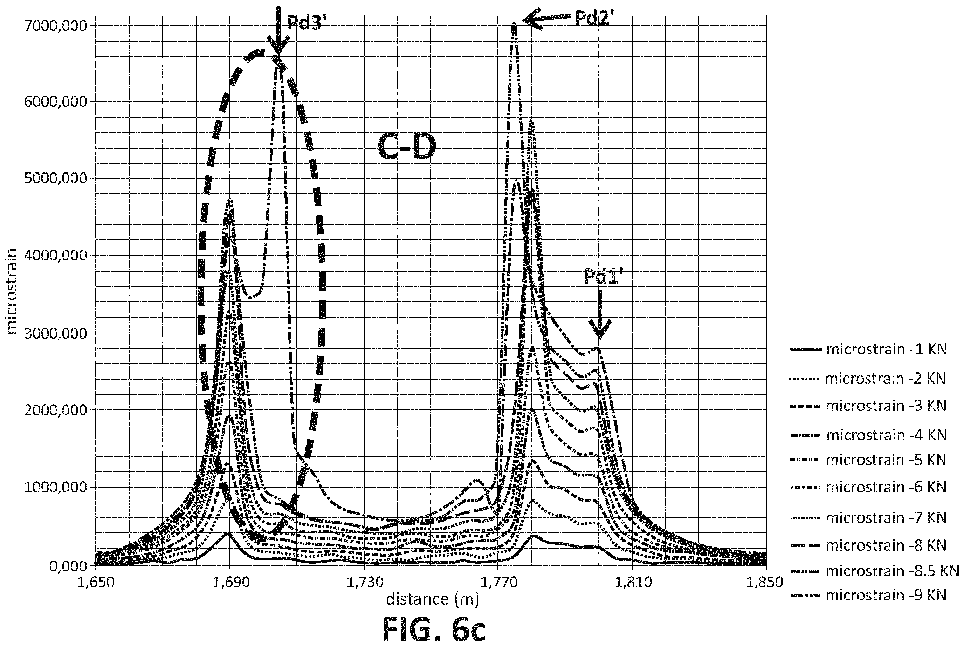

Figures 6b and 6c show similar strain signals as obtained when a load of 8,5 KN is transversely applied to the direction followed by the optical fiber sensor (3). However, the peak Pd2" is shifted to a greater extent from its reference signal. This indicates that the first damage (6) has just grown in the section E-F.

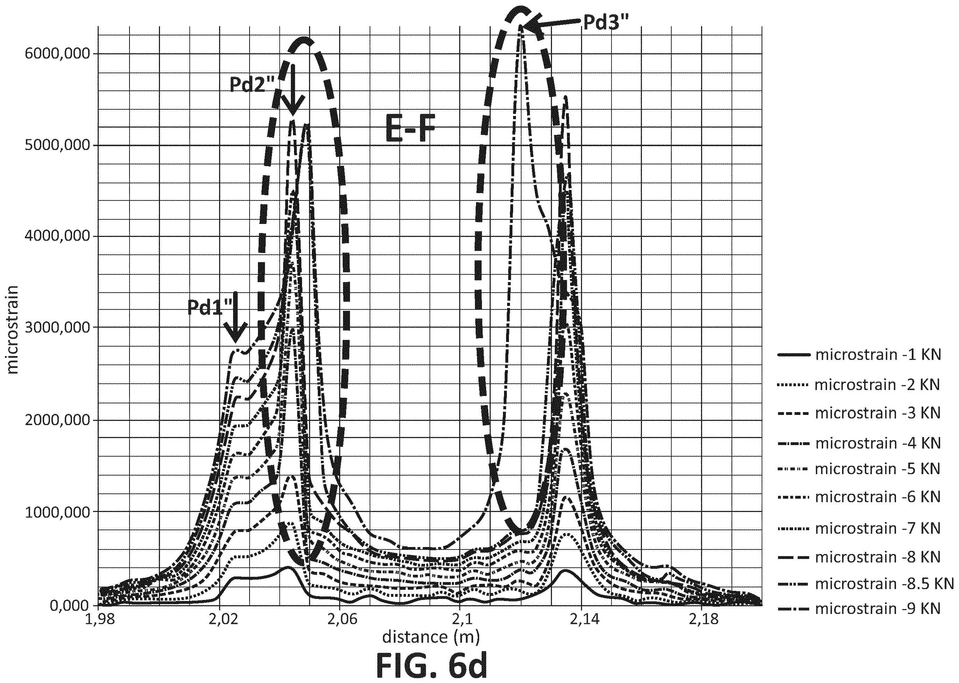

In addition, Figures 6b, 6c and 6d show that peaks Pd3, Pd3' and Pd3" are shifted from their respective reference signals. This indicates that a new damage (6) has been identified close to d3 and extending along the entire width of the part (2) as marked in Figure 6a.

Figure 7a shows a top view of the composite structure (1) similar to the view shown in Figure 6a in which the first detected damage (6) has grown towards the second detected damage (6) when a load of 9,5KN has been transversely applied to the composite part (2).

Figures 7b, 7c and 7d show that peaks Pd2, Pd2' and Pd2" are shifted to a greater extent from their respective reference signals, and towards the direction of d3, as marked in Figure 7a.

Figure 8a shows a top view of the composite structure (1) similar to the view shown in Figure 7a in which both the first detected damage (6) has grown towards the second detected damage (6), and the second detected damage (6) has grown towards the first detected damage (6), when a load of 10KN has been transversely applied to the composite part (2).

Figures 8b, 8c and 8d show that peaks Pd2, Pd2' and Pd2" are shifted even to a greater extent from their respective reference signals, and towards the direction of d3, as marked in Figure 8a.

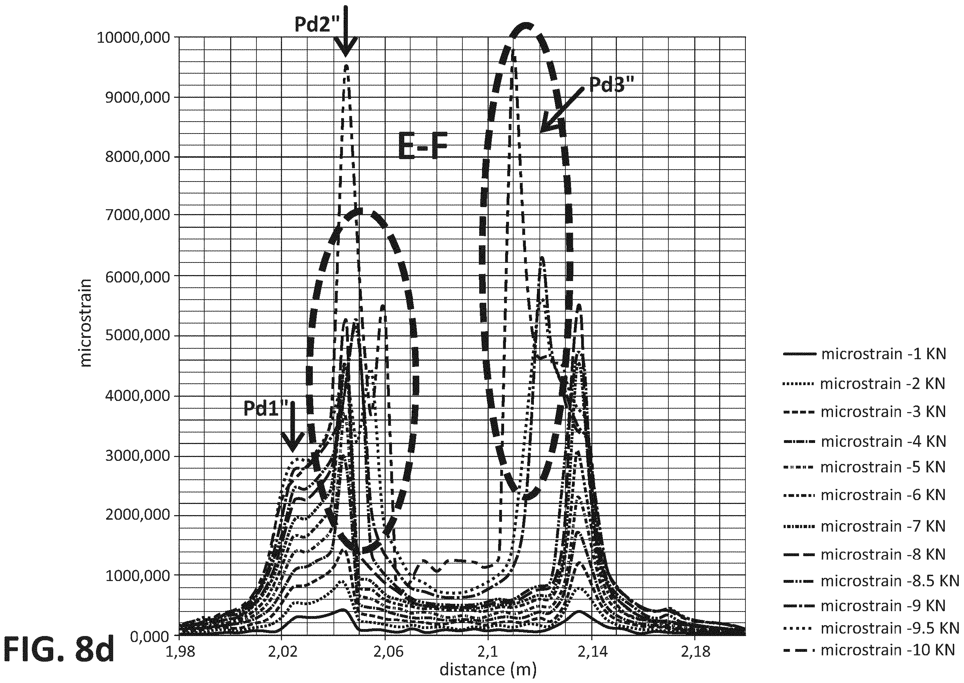

In addition, Figures 8b and 8d show that peaks Pd3 and Pd3" are shifted to a greater extent from their respective reference signals, and towards the direction of d2, as marked in Figure 8a.

In the showed Figures 1-8, the optical fiber sensor (3) is embedded in the adhesive line (6). Alternatively, the optical fiber sensor (3) can be bonded to a surface of the composite part (2) or embedded between the layers of the composite part (2).

Axial strain parameters can be represented by different types of graphs. For instance, Figure 9a and 9b shows a color-based graph related to the index of damage, where dark color means high probability of damage, medium dark color that the damage is not yet reached but it is closer (because of a high level of strain), and light color that no damage is foreseen. Figure 9a represents the deviation percentage of each peak of each strain signals obtained for the different levels of transversely applied loads (1KN to 10 KN) in the composite structure (1) shown in Figures 2-8. Figure 9b represents the peak deviation values (in mm) of each one of the strain signals obtained for the different levels of transversely applied loads (1KN to 10 KN) in the composite structure (1) shown in Figures 2-8.

In another way of representing the information, Figure 10-13 shows the strain signal of a damaged composite part (drawing A), and the reference signal associated to the same composite part when it is undamaged (drawing B), when different levels of force of 4 KN, 5KN, 6KN, and 7KN is transversely applied to said part.

## Claims

1. A composite structure (1) with damage location capability, comprising:
- at least one composite part (2) having an area to be monitored,
- at least one optical fiber sensor (3) in contact with at least the area to be monitored and deployed following a direction, and
- a processing data unit (4), in communication with the at least one optical fiber sensor (3), and adapted to:
- obtain optical parameters associated to the area to be monitored from the at least one optical fiber sensor (3),
- convert these optical parameters into axial strain parameters representing the mechanical strain magnitude experienced by the composite part (2) along an axial direction to the direction followed by the optical fiber sensor (3) when a force transverse to the direction followed by the optical fiber sensor (3) is applied,
- form a strain signal (S) from axial strain parameters,
- identify one target area (5) in the composite part (2) from each peak (Pi) of the strain signal (S) that surpasses a first established value with respect to a reference signal associated to an undamaged composite part,
- identify a damage in the target area (5) from each displacement of each peak (Pi) of the strain signal (S) that surpasses a second established value with respect to the reference signal associated to the undamaged composite part,
- obtain the location of the damage from the location of the displaced peak.

2. A composite structure (1) with damage location capability, according to claim 1, wherein the processing data unit (4) is further adapted to obtain the size of the identified damage from the value of the distance that each peak of the strain signal has been displaced with respect to the location of said peak in a reference signal associated to the target area (5) in an undamaged composite part.

3. A composite structure (1) with damage location capability, according to claim 2, wherein the processing data unit (4) is further adapted to obtain the residual strength of the composite part (2) from the size of the identified damage.

4. A composite structure (1) with damage location capability, according to any of the preceding claims, wherein the optical fiber sensor (3) is bonded to a surface of the composite part (2).

5. A composite structure (1) with damage location capability, according to any of the preceding claims, wherein the composite part (2) comprises at least two layers, and the optical fiber sensor (3) is embedded between said layers.

6. A composite structure (1) with damage location capability, according to any of the preceding claims, wherein further comprises at least one adhesive line (9) joined to the composite part (2), and wherein the optical fiber sensor (3) is embedded in the at least one adhesive line (9).

7. A composite structure (1) with damage location capability, according to any of the preceding claims, wherein the target area (5) comprises a transition area in the at least one composite part (2).

8. An aircraft, comprising a composite structure (1) with damage location capability according to any of claims 1 to 7.

9. A method for manufacturing a composite structure (1) with damage location capability, comprising the steps of:
- providing at least one composite part (2) having an area to be monitored,
- providing at least one optical fiber sensor (3), and deploying the at least one optical fiber sensor (3) to be in contact with at least the area to be monitored, and
- providing a processing data unit (4), in communication with the at least one optical fiber sensor (3), and
- adapting the processing data unit (4) to:
- obtain optical parameters associated to the area to be monitored from the optical fiber sensor (3),
- convert these optical parameters into axial strain parameters representing the mechanical strain magnitude experienced by the composite part (2) along an axial direction to the direction followed by the optical fiber sensor (3) when a force transverse to the direction followed by the optical fiber sensor (3) is applied,
- form a strain signal (S) from axial strain parameters,
- identify one target area (5) in the composite part (2) from each peak (Pi) of the strain signal (S) that surpasses a first established value with respect to a reference signal associated to an undamaged composite part,
- identify a damage in the target area (5) from each displacement of each peak (Pi) of the strain signal (S) that surpasses a second established value with respect to a reference signal associated to an undamaged composite part,
- obtain the location of the damage from the location of the displaced peak.

10. A method for manufacturing a composite structure (1) with damage location capability, according to claim 9, wherein the processing data unit (4) is further adapted to obtain the size of the identified damage from the value of the distance that each peak of the strain signal has been displaced with respect to the location of said peak in a reference signal associated to the target area (5) in an undamaged composite part.

11. A method for manufacturing a composite structure (1) with damage location capability, according to claim 10, wherein the processing data unit (4) is further adapted to obtain the residual strength of the composite part (2) from the size of the identified damage.

12. A method for manufacturing a composite structure (1) with damage location capability, according to any of claims 9-11, wherein the optical fiber sensor (3) is bonded to a surface of the composite part (2).

13. A method for manufacturing a composite structure (1) with damage location capability, according to any of claims 9-12, wherein the composite part (2) comprises at least two layers, and the optical fiber sensor (3) is embedded between said layers.

14. A method for manufacturing a composite structure (1) with damage location capability, according to any of the claims 9-13, wherein further comprises at least one adhesive line (9) joined to the composite part (2), and wherein the optical fiber sensor (3) is embedded in the at least one adhesive line (9).

15. A method for manufacturing a composite structure (1) with damage location capability, according to any of the claims 9-14, wherein the target area (5) comprises a transition area in the at least one composite part (2).
